Europäisches Patentamt

European Patent Office

Office européen des brevets

(11) Publication number: **0 389 446**
**A2**

## (12) EUROPEAN PATENT APPLICATION

(21) Application number: **90830095.7**

(22) Date of filing: **13.03.90**

(51) Int. Cl.5: **G01N 21/41, G01N 33/04**

(30) Priority: **24.03.89 IT 514189**

(43) Date of publication of application:
**26.09.90 Bulletin 90/39**

(84) Designated Contracting States:
**AT BE CH DE ES FR GB LI NL**

(71) Applicant: **SOTELCO S.R.L.**
**Via G.B. da Farfengo, 52**
**I-25127 Brescia(IT)**

(72) Inventor: **Zaglio, Enrico, Sotelco S.r.1.**
**Via G.B. da Farfengo 52**
**I-25127 Brescia(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Optical measurement device for measuring the protein contents of milk.**

(57) An optical measuring device for measuring the proteins contents of milk comprises a refractometer for meauring the milk refraction value,including a prism,a fixed light source,a lens,a prism supporting element,a photosensitive element for detecting protein contents indicative refraction data,a data display,electric control circuitry and a housing holding the mentioned components a defining a recess for receiving a sample drop to be measured.

This device being characterized in that it is based on an electronic read out of the data which are transmitted,in the form of light beams,from the Pulfrick refractometer.

EP 0 389 446 A2

FIG.2

## BACKGROUND OF THE INVENTION

The present invention relates to an optical measurement device for measuring the protein contents of milk.

As is known the protein contents of milk,which is a very important parameter for example in the dairy field,is conventionally measured by very complex laboratory tests,based on chemical and physical methods,which require a long time and must be carried out by skilled personnel.

## SUMMARY OF THE INVENTION

Accordingly,the main object of the present invention is to overcome the above mentioned drawbacks by providing a device for measuring the protein contents of milk which is very simple constructionwise,reliable and can be easily and quickly operated by unskilled personnel.

According to one aspect of the present invention, the above object,as well as yet other objects,which will become more apparent thereinafter,are achieved by an optical measurement device for measuring the protein contents of milk having the features of the characterizing part of the main claim.

Further features of the subject device are defined in the subclaims.

More specifically,the main object of the present invention has been achieved by a device based on the light refraction so as to obviate the need of preliminarly processing the milk sample,or adding to the milk reactive substances.Thus the device according to the present invention can be operated by unskilled personnel.

The main component element of the subject device,in particular,is a photosensitive element which is capable to provide very accurate and quick read outs,said element including,for example,a so-called CCD element.

The device is based on the Pulfrick refractometer,comprising a light refracting element made of a material having a high refraction value,such as glass or plexiglass,which is illuminated by a suitable light source,such as a filament lamp which,through a lens,projects a light beam on a milk or other liquid drop,so as to measure the refraction value or 'index' of said drop which,as is known,will depend on the milk protein contents.

Thus,the optical measuring device according to the present invention will provide the following great advantages:

- it can be operated in a very easy way;
- it requires a very reduced amount of milk for carrying out the measurement method;
- it comprises a digital display adapted to provide a very simple and accurate read out of the measurement results;
- it can be used for performing refraction measurements of any type and on any liquid samples,provided that it is properly calibrated;
- the measurement is immediate and of direct type.

## BRIEF DESCRIPTION OF THE DRAWINGS

Further characteristics and advantages of the present invenion will become more apparent from the following detailed description of a preferred embodiment thereof,with reference to the accompanying not limitative drawings,where:

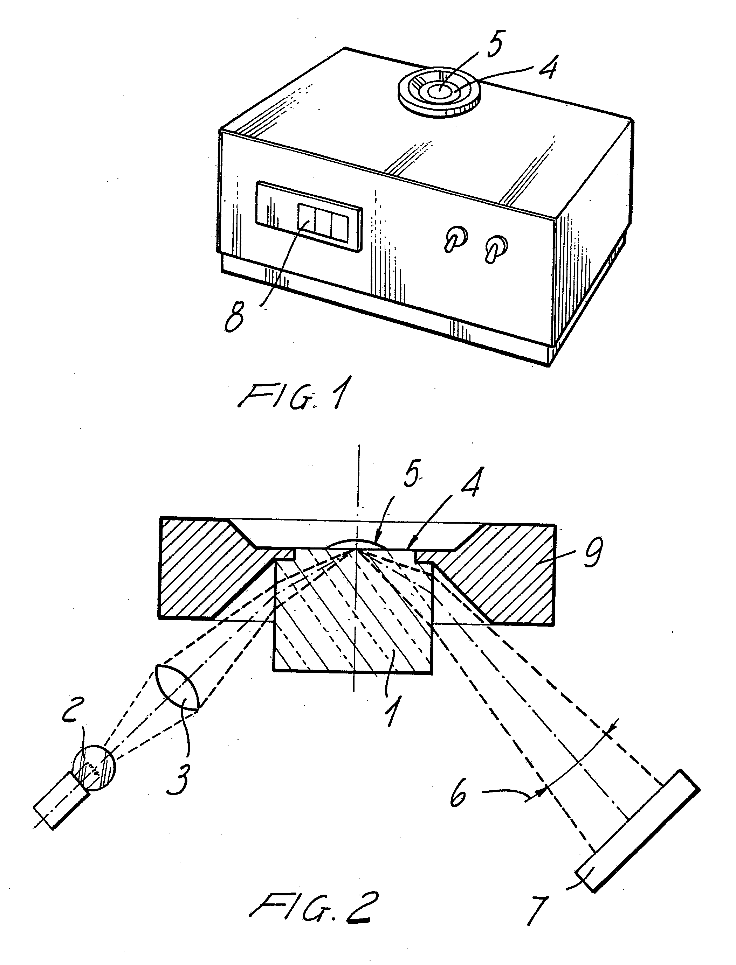

FIGURE 1 shows the measurement device according to the present invention,held in its housing with the exposed parts thereof; and

FIGURE 2 is a schematic exploded view,partially cross-sectioned,of the device according to the present invention,showing the main components thereof with the exception of the electronic control system.

## DESCRIPTION OF THE PREFERRED EMBODIMENT

With reference to the figures of the drawing,the measurement optical device for measuring the protein contents of milk and other liquid samples,according to the present invention,substantially comprises a light refracting element 1,made of a material having a high light refracting value or index,such as glass or plexiglass,which is illuminated by a light source,i.e a filament lamp 2,the light beam of which is concentrated or focalized by the lens 3 so as to provide a light cone the cone apex of which is arranged on the outer surface 4 of the light refracting element 1,on said outer surface being located the liquid or milk drop 5 the protein contents of which must be measured.

The light impinging on the mentioned element is partially reflected by a full reflection and in part is refracted and exits.

On the opposite side of the refraction element,i.e on the opposite side to the illuminating lamp,there is provided a hole which is symmetrically arranged with respect to the inlet position,therefrom the light beam 6 will emerge after the refraction phenomenon.

As it should be apparent the output light beam 6 will comprise a light beam generated by the light refraction due to the sample drop 5.

This refracted light beam,in particular,will impinge on the photosensitive element 7,for example of the CCD type,which will measure the offset angle thereof.

In order to provide this measurement,in the embodiment being illustrated,the output light beam is caused to impinge on the photosensitive element so as to illuminate a set area thereof,which will depend on the sample being tested.

Then,the output signal of the photosensitive element will be suitably processed by specifically designed electronic circuits,which have not been shown in any further details since they can be easily designed by one having an ordinary skillness in the electronic circuit field.

These electronic circuit,in particular will control the digital diplay 8 to display the measurement results.

Advantageously,the mentioned control electronic circuits will be held in the casing of the device,together with all of the mentioned components.

While the invention has been disclosed and illustrated with reference to a preferred embodiment thereof,it should be apparent that the disclosed embodiment is susceptible to several modifications and variations all of which will come within the spirit and scope of the appended claims.

For example,while the invention has been shown in relationship with the measurement of the protein contents of milk,it should be apparent that the disclosed device can be easily modified or calibrated to measure the protein contents or refraction index of aother liquid samples.

**Claims**

1- An optical measurement device for measuring the proteins contents of milk comprising a refracting assembly for detecting a refraction value of a milk sample,said refracting assembly including a prism,a fixed light sourcea lens,a prism supporting metal element,a photosensitive element adapted to detect light refraction data indicative of the milk protein contents,a data display and electronic control circuit means,and a housing holding the above mentioned elements,on said housing there being provided a recess for receiving a drop of the milk sample to be tested.

2- A device according to claim 1,wherein said photosensitive element is adapted to detect the refraction angle of the refracted light beam.

3- A device according to claim 1,wherein said photosensitive element is adapted to transform into voltages the variations of said refracted beam angle.

4- A device according to claim 1,wherein said data display is a digital display.

5- A device according to claim 1,wherein said device comprises calibrating means for calibrating said photosensitive element to detect the refraction angle of a set liquid sample different from said milk sample.

FIG. 1

FIG. 2